# EUROPEAN PATENT SPECIFICATION

(11) **EP 1 944 686 B1**
(45) Date of publication and mention of the grant of the patent: **13.03.2019**
(21) Application number: 07250105.9
(22) Date of filing: 11.01.2007
(51) Int. Cl.: G06F 3/14

(54) **Removable apparatus with a plug-and-show function**
Abnehmbare Vorrichtung mit "Plug-and-Show" Funktion
Dispositif amovible avec fonction "Plug-and-Show"

(43) Date of publication of application: 16.07.2008
(73) Proprietor: Barco Ltd., New Taipei City 22041 (TW)
(72) Inventor: Chang, Kuo-lung, Junghe City, Taipei County 235 (TW)
(74) Representative: MacDougall, Alan John Shaw

(56) References cited:
- US-A- 6 014 133
- US-A1- 2002 138 702
- US-A1- 2002 159 517
- US-A1- 2004 143 716
- US-A1- 2004 193 864
- US-A1- 2005 041 872
- US-A1- 2005 099 500
- US-A1- 2005 109 841

## Description

### BACKGROUND OF THE INVENTION

### (1) Field of the Invention

The invention relates to a removable apparatus, and more particularly to the USB portable disk with a plug-and-show function, which the USB portable disk is applied to a wireless presentation system.

### (2) Description of the Prior Art

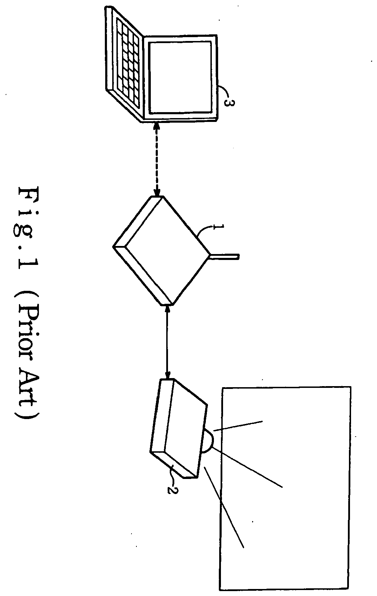

Referring to FIG.1, a block diagram of a conventional wireless presentation system is shown. A wireless gateway 1 is connected with a display device 2 at the display end. The display device 2 can be a projector, a plasma TV or any the like. The wireless gateway 1 provides the system connection and data accessing to a wireless network. At the user end of the system, a computer 3 capable of displaying presentation frames is introduced. The presentation frames shown on the computer 3 can be wireless forwarded to the wireless gateway 1, and further to the display device 2.

The wireless presentation system mainly forwards the presentation frames through the wireless network. Merits thereby include better mobility to the user, less wiring work, and so on. Due to tremendous data transmission required in a presentation, the transmission speed may be too slow to degrade the presentation quality while using the wireless network to transmit data. To improve such a shortcoming, a mirror driver is usually applied to the computer at the user end. The role and functions of the mirror driver in the wireless presentation system will be described as follows.

In a presentation, some correlations usually exist in consequent presentation frames. For example, they may apply the same background or the same color system. That is to say that a presentation frame usually resemble its preceding or following frame; especially when descriptions and animations are included in these presentation frames. At this time, the mirror driver is used to analyze the difference between presentation frames and to capture the new image of the next presentation frame from the computer. The new image is then forwarded to the wireless gateway through the wireless network. The wireless gateway updates the new image to the current presentation frame so as to produce a new presentation frame thereinside. The new presentation frame is then output to the display device for presentation.

Though the mirror driver may reduce the transmission volume of the presentation system and thus increase the transmission speed as well as the presentation quality, yet following disadvantages still exist.
a. A complete installation of the mirror driver to the computer is needed before it can be used in helping the data transmission. Such an installation usually takes a lot of time.
b. Because the installation of the mirror driver is required in advance and because most of companies usually apply strict internal control in computer usage, the lousy application process leading to a successful usage of the mirror driver usually inhibits the employee to do so.
c. As the wireless presentation system become popular, compatibility between various wireless gateways and mirror drivers becomes an issue. It is usually a limitation that a wireless gateway can only go with a mirror driver produced by the same manufacturer.

In the art, before a presentation can be held, the presentation material is generally stored in a removable apparatus such as a USB flash disk. The removable apparatus is then plugged into the computer for presentation. In general, a plug-and-show application is expected to the usage of the removable apparatus. However, limited by the requirement of the mirror driver, the chore from installing the mirror driver before displaying the presentation material usually cause inconvenience to the usage of the wireless presentation system.

Therefore, how to overcome the aforesaid shortcomings in using the wireless presentation system becomes one of urgent topics to the skilled person in this art.

US2005/0109841A1 discloses compact personal token apparatus, suitably resembling a conventional USB memory fob in size, shape, and form which can be plugged into a PC and interfaced with the virtual world of the Internet. The apparatus is capable of loading and storing information from the Internet, via the PC to its flash memory or EEPROM and then using the stored information or value via its wireless interface in the real world. The apparatus is capable of implementing an auto-run application, when inserted into a personal computer. The apparatus is capable of exchanging information with other devices having compatible interfaces. The apparatus can also function as a firewall when plugged between an Internet connection and a PC.

In a different field of endeavor, US 2005/0099500A1 discloses a network camera system, a camera unit detects a change in circumstances surrounding the camera unit. In response to detection of the change, the camera unit captures an image. Then, the camera unit extracts, from the captured image, a partial image corresponding to an area in which the change in curcumstances occurred. The camera unit transmits the extracted partial image to a server unit.

US 2005/041872A1 discloses a method for converting presentation files into compressed image files is provided. The method includes reading and parsing a PPT presentation file to identify each presentation slide and each presentation object in each presentation slide. The attributes of each presentation object are examined to determine whether effects are applied, and to identify animated GIF objects. The method provides for capturing the end-point effect applied to any presentation object and rendering the presentation object in as many compressed image files as necessary to capture the end-point effect.

### SUMMARY OF THE INVENTION

Accordingly, it is an object of the present invention to provide a USB portable disk with a plug-and-show function. As soon as the USB portable disk connects with the computer carrying the wireless presentation system, the presentation frames can be displayed directly.

One embodiment of the present invention provides a wireless presentation system that connects with the USB portable disk to display the presentation frames in a plug-and-show pattern.

It is a further object of the present invention to provide a method for the USB portable disk to perform the plug-and-show displaying.

In one embodiment, the USB portable disk with a plug-and-show function is applied to a wireless presentation system. The wireless presentation system includes a computer, a wireless gateway and a display device. The USB portable disk includes a wireless network detecting module, a memory, an image capturing and analyzing module, and a plug-and-show module.

The wireless network detecting module may include thereinside an extended service set identifier (ESSID) of the wireless gateway. When the USB portable disk connects with the computer, the wireless network detecting module can detect surrounding wireless network signals and, if the wireless network signals exist, a wireless network connection between the USB portable disk and the wireless gateway can be established in accordance with the ESSID.

The memory for storing the plural presentation frames can further include a buffer for temporarily storing the current presentation frame (the N-th presentation frame) displaying in the computer and the preceding presentation frame (the N-1-th presentation frame).

The image capturing and analyzing module can perform an image capturing and analyzing process to locate difference regions between the N-th presentation frame and the N-1-th presentation frame. The difference regions in the N-th presentation frame can be read as an integral update image which can be a rectangular area including those difference regions.

The plug-and-show module is mainly to control the image capturing and analyzing module in performing the image capturing and analyzing process and to further forward the update image to the wireless gateway through the computer, when the USB portable disk connects with the computer. In order to reduce the transmission load of the wireless network and to raise the transmission speed, the update image can be zipped (compressed) in advance.

After the wireless gateway receives the zipped update image, an unzipping process is firstly applied to the zipped update image so as to integrate the update image into the N-1-th presentation frame inside the wireless gateway to further produce a new presentation frame identical exactly with the N-th presentation frame of the computer. The new presentation frame (namely the N-th presentation frame) is then output to the display device for broadcasting.

In one embodiment, a wireless presentation method is provided that uses the USB portable disk and includes the steps of: a. connecting a USB portable disk storing plural presentation frames to a computer; b. controlling the computer to establish a wireless connection with a wireless gateway; c. displaying the N-th presentation frame in the computer; d. performing an image capturing and analyzing process to locate a difference region between the N-th presentation frame and the N-1-th presentation frame and further to capture an update image corresponding to the difference region at the N-th presentation frame; e. forwarding the update image to the wireless gateway through the computer; f. integrating the update image with the N-1-th presentation frame to reform the N-th presentation frame inside the wireless gateway; g. forwarding the reformed N-th presentation frame of the wireless gateway to a display device; h. determining if or not all the presentation frames have been displayed; i. if negative, assigning N+1 to replace N and to repeat step c; and j. if positive, terminating the display of the presentation frames.

All these objects can be achieved by the USB portable disk with a plug-and-show function described below.

### BRIEF DESCRIPTION OF THE DRAWINGS

The present invention will now be specified with reference to its preferred embodiment illustrated in the drawings, in which:
FIG.1 is a schematic block diagram of a conventional wireless presentation system;
FIG.2 shows a relationship between a preferred removable apparatus, in the form of a USB portable disk, with a plug-and-show function in accordance with the present invention and a wireless presentation system;
FIG.3 is a flowchart of a preferred wireless presentation method by using the removable apparatus of the present invention; and
FIG.4 is a schematic view showing how an image capturing and analyzing module of the present invention performs an image capturing and analyzing process.

### DESCRIPTION OF THE PREFERRED EMBODIMENT

The invention disclosed herein is directed to a removable apparatus, in the form of a USB portable disk, with a plug-and-shown function. In the following description, numerous details are set forth in order to provide a thorough understanding of the present invention. It will be appreciated by one skilled in the art that variations of these specific details are possible while still achieving the results of the present invention. In other instance, well-known components are not described in detail in order not to unnecessarily obscure the present invention.

In the present invention, the removable apparatus is usually applied to a wireless presentation system. By providing the removable apparatus to connect with the wireless presentation system, a plug-and-show type of presentation show can be held immediately.

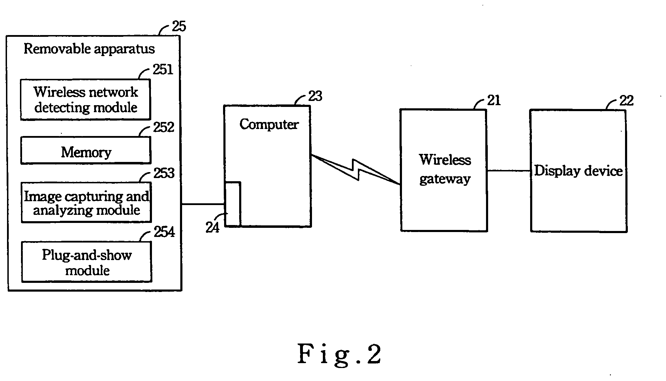

Referring now to FIG.2, a relationship between a preferred removable apparatus with a plug-and-show function in accordance with the present invention and a wireless presentation system is shown in this block diagram.

As shown, the wireless presentation system includes, at the display end, a wireless gateway 21 and a display device 22 such as a projector, a plasma TV, or any the like. The wireless gateway 21 connected with the display device 22 can provide connection and data accessing to the wireless network. At the user end of the wireless presentation system, a computer 23 capable of displaying presentation frames is included. The computer 23 has a transmission port 24 such as a USB interface. The removable apparatus of the present invention is in the form of a USB portable disk capable of forming a plug-and-show connection with the transmission port 24 of the computer 23.

The removable apparatus 25 includes a wireless network detecting module 251, a memory 252, an image capturing and analyzing module 253, and a plug-and-show module 254.

The wireless network detecting module 251 includes thereinside an extended service set identifier (ESSID) of the wireless gateway 21. When the removable apparatus 25 connects with the computer 23, the wireless network detecting module 251 can detect surrounding wireless network signals and, if the wireless network signals exist, a wireless network connection between the removable apparatus 25 and the wireless gateway 21 can be established in accordance with the ESSID.

The memory 252 for storing a plurality of presentation frames can further include a buffer for temporarily storing the current presentation frame (the N-th presentation frame) displaying in the computer 23 and the preceding presentation frame (the N-1-th presentation frame).

The image capturing and analyzing module 253 can perform an image capturing and analyzing process to locate difference regions (at least one difference region) between the N-th presentation frame and the N-1-th presentation frame. The difference regions in the N-th presentation frame can be read as an integral update image which can be a rectangular area including those difference regions.

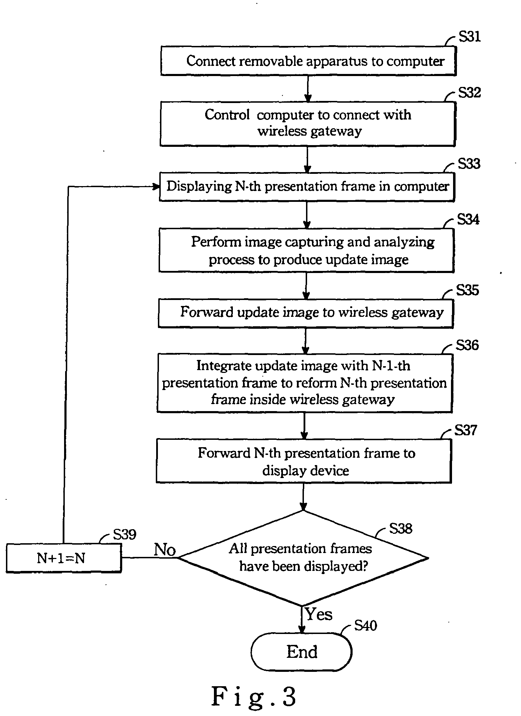

Referring now to FIG.3, a flowchart of a preferred wireless presentation method by using the removable apparatus of the present invention is shown. The wireless presentation method by using the removable apparatus includes the steps of: connecting a removable apparatus storing plural presentation frames to a computer (S31); controlling the computer to establish a wireless connection with a wireless gateway (S32); displaying the N-th presentation frame in the computer (S33); performing an image capturing and analyzing process to locate at least a difference region between the N-th presentation frame and the N-1-th presentation frame and further to capture an update image corresponding to the difference region at the N-th presentation frame (S34); forwarding the update image to the wireless gateway through the computer (S35); integrating the update image with the N-1-th presentation frame to reform the N-th presentation frame inside the wireless gateway (S36); forwarding the reformed N-th presentation frame of the wireless gateway to a display device (S37); determining if or not all the presentation frames have been displayed (S38); if negative, assigning N+1 to replace N (S39) and further to repeat step S33; and, if positive, terminating the display of the presentation frames (S40).

In step S34, when N=1, the 0-th presentation frame can be a blank frame or a preset frame. Further, between the N-th presentation frame and the N-1-th presentation frame, either a single one difference region or a plurality of difference regions may be possible. Also, the number of the update image may be more than one. However, the update image is a rectangular area containing the difference region.

In step S35, before it is forwarded to the wireless gateway, the update image is zipped in advance so as to reduce the transmission load of the wireless network. Similarly, in step S36, as soon as the wireless gateway receives the zipped update image, an unzipping process is firstly applied to the zipped update image before the update image can be integrated into the N-1-th presentation frame inside the wireless gateway.

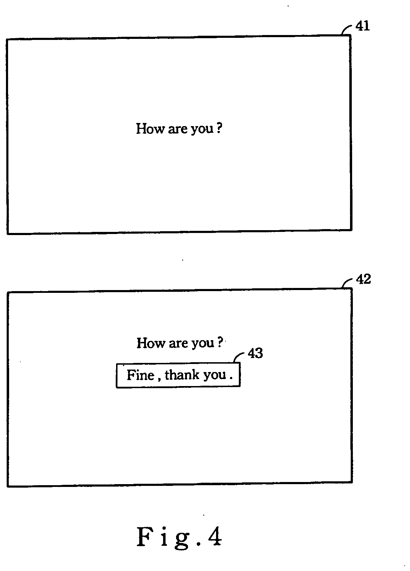

Referring now to FIG.4, a schematic view showing how an image capturing and analyzing module of the present invention performs an image capturing and analyzing process is present. As shown, the N-1-th presentation frame 41 and the N-th presentation frame 42 are included. The N-1-th presentation frame 41 includes captions 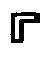 How are you? 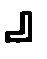 , while the N-th presentation frame 42 includes captions of 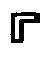 How are you? 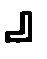 and 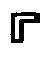 Fine, thank you. 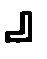 43.

At this time, an exclusive-or (XOR) operation can be applied to locate the difference regions between the two presentation frames 41 and 42. Apparently, in this example, the difference region is the 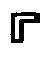 Fine, thank you. 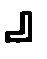 . Further, the update image 43 formed by a rectangular area in the N-th presentation frame 42 is retrieved from the N-th presentation frame. Preferably, the rectangular area 43 can be the least-area rectangle containing the difference region.

By providing the removable apparatus with a plug-and-show function of the present invention, a presentation or a film show can be simply begun by plugging the removable apparatus into the computer of the wireless presentation system. By compared to the convention technique, the present invention does not need to install any mirror driver in advance. Therefore, by utilizing the removable apparatus of the present invention, the operation of the presentation can be made much easier, the display of the presentation materials won't affect the normal usage of the computer after displaying the presentation materials, and the situation that the mirror driver may be loaded to bother the computer will never happen.

The image capturing and analysing module 253 and the plug-and-show module 254 may be implemented either by dedicated hardware circuits or using software that is run in conjunction with a programmable computer device. When provided as software, the software may be downloaded as a signal and stored in the removable apparatus 25.

While the present invention has been particularly shown and described with reference to a preferred embodiment, it will be understood by those skilled in the art that various changes in form and detail may be without departing from the scope of the present invention.

## Claims

1. A USB portable disk (25) with a plug-and-show function, applied to a wireless presentation system having a computer (23) and a wireless gateway (21), the computer (23) being capable of displaying a plurality of presentation frames and wireless connecting to the wireless gateway (21), the USB portable disk (25) being capable of establishing a removable connection with the computer (23), **characterized by** :
a memory (252) for storing an N-th presentation frame and an N-1-th presentation frame;
an image capturing and analyzing module (253) for locating at least difference region between the N-th presentation frame and the N-1-th presentation frame and for further capturing an update image corresponding to the difference region at the N-th presentation frame; and
a plug-and-show module (254) for controlling the image capturing and analyzing module in performing an image capturing and analyzing process and for further forwarding the update image to the wireless gateway (21) through the computer (23);
wherein, after the wireless gateway (21) receives the update image, the update image is integrated with the N-1-th presentation frame inside the wireless gateway (21) so as to reproduce the N-th presentation frame inside the wireless gateway (21); and
including a wireless network detecting module for detecting wireless signals of said wireless gateway and for controlling wireless connection between said computer and said wireless gateway, when said USB portable disk connects with said computer.

2. A USB portable disk (25) as claimed in Claim 1, **characterized in that** said wireless presentation system further includes a display device (22) connected with said wireless gateway (21) and used for displaying said presentation frames output from said wireless gateway (21).

3. A USB portable disk (25) as claimed in Claim 1, **characterized in that** said computer (23) has a transmission port (24) for establishing said removable connection with said USB portable disk (25).

4. A wireless presentation system, **characterized by**:
a computer (23) for displaying a plurality of presentation frames;
a wireless gateway (21) capable of wireless connecting with the computer (23) and further receiving the presentation frames forwarded from the computer (23); and
a USB portable disk (25), as defined in claim 1, forming a removable connection with the computer (23).

5. A wireless presentation system as claimed in Claim 4, further **characterized by** including a display device (22) connected with said wireless gateway (21) and used for displaying said presentation frames output from said wireless gateway (21).

6. A wireless presentation system as claimed in Claim 4, **characterized in that** said computer (23) has a transmission port (24) for establishing said removable connection with said USB portable disk (25).

7. A wireless presentation system as claimed in Claim 4, **characterized in that** said USB portable disk (25) further includes a wireless network detecting module (251) for detecting wireless signals of said wireless gateway (21) and for controlling wireless connection between said computer (23) and said wireless gateway (21), when said USB portable disk (25) connects with said computer (23).

8. A wireless presentation method by using a USB portable disk (25), the method **characterized by** the steps of:
a. connecting the USB portable disk (25) storing plural presentation frames to a computer (23);
b. controlling the computer (23) to establish a wireless connection with a wireless gateway (21);
c. displaying an N-th presentation frame in the computer (23);
d. performing an image capturing and analyzing process to locate at least a difference region between the N-th presentation frame and an N-1-th presentation frame and further to capture an update image corresponding to the difference region at the N-th presentation frame;
e. forwarding the update image to the wireless gateway (21) through the computer (23);
f. integrating the update image with the N-1-th presentation frame to reform the N-th presentation frame inside the wireless gateway (21);
g. forwarding the reformed N-th presentation frame of the wireless gateway (21) to a display device (22);
h. determining if or not all the presentation frames have been displayed; and
i. if negative, assigning N+1 to replace N and further to repeat step c; otherwise, terminating the display of the presentation frames.

9. A method as claimed in Claim 8, **characterized in that** said USB portable disk (25) includes thereinside an extended service set identifier (ESSID) of said wireless gateway (21), said computer (23) connecting with said wireless gateway (21) through the ESSID.

10. A method as claimed in Claim 8, **characterized in that** said step d uses an exclusive-or (XOR) operation to locate said difference region between said N-th presentation frame and said N-1-th presentation frame.

11. A method as claimed in Claim 8, **characterized in that** said update image of said step d is a rectangular area containing said difference region.

12. A method as claimed in Claim 8 **characterized in that** said update image of said step e is zipped in advance before being forwarded to said wireless gateway (21) through said computer (23).

13. A method as claimed in Claim 12 **characterized in that** said update image of said step f is unzipped in advance before being integrated with said N-1-th presentation frame.

14. A computer program comprising instructions to cause the computer device of claim 4 to execute the steps of the method of claim 8.

## Patentansprüche

1. Tragbare USB-Festplatte (25) mit einer Plug-and-Show-Funktion, angewendet auf ein drahtloses Präsentationssystem mit einem Computer (23) und einem drahtlosen Gateway (21), wobei der Computer (23) eine Mehrzahl von Präsentations-Frames anzeigen und mit dem drahtlosen Gateway (21) drahtlos verbunden werden kann, wobei die tragbare USB-Festplatte (25) eine entfernbare Verbindung mit dem Computer (23) einrichten kann, **gekennzeichnet durch**:
einen Speicher (252) zum Speichern eines N-ten Präsentations-Frame und eines N-1-ten Präsentations-Frame;
ein Bildaufnahme- und -analysemodul (253) zum Lokalisieren wenigstens einer Differenzregion zwischen dem N-ten Präsentations-Frame und dem N-1-ten Präsentations-Frame und zum weiteren Aufnehmen eines Update-Bildes entsprechend der Differenzregion am N-ten Präsentations-Frame; und
ein Plug-and-Show-Modul (254) zum Steuern des Bildaufnahme- und -analysemoduls beim Durchführen eines Bildaufnahme- und -analyseprozesses und zum weiteren Weiterleiten des Update-Bildes zu dem drahtlosen Gateway (21) durch den Computer (23);
wobei nach dem Empfangen des Update-Bildes durch das drahtlose Gateway (21) das Update-Bild mit dem N-1-ten Präsentations-Frame innerhalb des drahtlosen Gateway (21) integriert wird, um den N-ten Präsentations-Frame innerhalb des drahtlosen Gateway (21) zu reproduzieren; und
mit einem drahtlosen Netzwerkerkennungsmodul zum Erkennen von Funksignalen des genannten drahtlosen Gateway und zum Steuern einer drahtlosen Verbindung zwischen dem genannten Computer und dem genannten drahtlosen Gateway, wenn die genannte tragbare USB-Fetplatte mit dem genannten Computer verbunden ist.

2. Tragbare USB-Festplatte (25) nach Anspruch 1, **dadurch gekennzeichnet, dass** das genannte drahtlose Präsentationssystem ferner ein Anzeigegerät (22) aufweist, das mit dem genannten drahtlosen Gateway (21) verbunden ist und zum Anzeigen der genannten, von dem genannten drahtlosen Gateway (21) ausgegebenen Präsentations-Frames benutzt wird.

3. Tragbare USB-Festplatte (25) nach Anspruch 1, **dadurch gekennzeichnet, dass** der genannte Computer (23) einen Sendeport (24) zum Einrichten der genannten entfernbaren Verbindung mit der genannten tragbaren USB-Festplatte (25) hat.

4. Drahtloses Präsentationssystem, **gekennzeichnet durch**:
einen Computer (23) zum Anzeigen einer Mehrzahl von Präsentations-Frames;
ein drahtloses Gateway (21), das eine drahtlose Verbindung mit dem Computer (23) herstellen und ferner die von dem Computer (23) weitergeleiteten Präsentations-Frames empfangen kann; und
eine tragbare USB-Festplatte (25) nach Anspruch 1, die eine entfernbare Verbindung mit dem Computer (23) bildet.

5. Drahtloses Präsentationssystem nach Anspruch 4, ferner **dadurch gekennzeichnet, dass** es ein Anzeigegerät (22) aufweist, das mit dem genannten drahtlosen Gateway (21) verbunden ist und zum Anzeigen der genannten, von dem genannten drahtlosen Gateway (21) ausgegebenen Präsentations-Frames benutzt wird.

6. Drahtloses Präsentationssystem nach Anspruch 4, **dadurch gekennzeichnet, dass** der genannte Computer (23) einen Sendeport (24) zum Einrichten der genannten entfernbaren Verbindung mit der genannten tragbaren USB-Festplatte (25) hat.

7. Drahtloses Präsentationssystem nach Anspruch 4, **dadurch gekennzeichnet, dass** die genannte tragbare USB-Festplatte (25) ferner ein drahtloses Netzwerkerkennungsmodul (251) zum Erkennen von Funksignalen des genannten drahtlosen Gateway (21) und zum Steuern einer drahtlosen Verbindung zwischen dem genannten Computer (23) und dem genannten drahtlosen Gateway (21) aufweist, wobei die genannte tragbare USB-Festplatte (25) mit dem genannten Computer (23) verbunden ist.

8. Drahtloses Präsentationsverfahren durch Verwenden einer tragbaren USB-Festplatte (25), wobei das Verfahren durch die folgenden Schritte gekennzeichnet ist:
a. Verbinden der tragbaren USB-Festplatte (25), die mehrere Präsentations-Frames speichert, mit einem Computer (23) ;
b. Steuern des Computers (23) zum Einrichten einer drahtlosen Verbindung mit einem drahtlosen Gateway (21);
c. Anzeigen eines N-ten Präsentations-Frame in dem Computer (23);
d. Durchführen eines Bildaufnahme- und - analyseprozesses zum Lokalisieren wenigstens einer Differenzregion zwischen dem N-ten Präsentations-Frame und einem N-1-ten Präsentations-Frame und zum weiteren Aufnehmen eines Update-Bildes entsprechend der Differenzregion am N-ten Präsentations-Frame;
e. Weiterleiten des Update-Bildes zum drahtlosen Gateway (21) durch den Computer (23);
f. Integrieren des Update-Bildes mit dem N-1-ten Präsentations-Frame zum Umformen des N-ten Präsentations-Frame innerhalb des drahtlosen Gateway (21);
g. Weiterleiten des umgeformten N-ten Präsentations-Frame des drahtlosen Gateway (21) zu einem Anzeigegerät (22);
h. Feststellen, ob alle Präsentations-Frames angezeigt wurden oder nicht; und
i. Zuordnen, falls negativ, von N+1 zum Ersetzen von N und ferner zum Wiederholen von Schritt c; ansonsten Beenden der Anzeige der Präsentations-Frames.

9. Verfahren nach Anspruch 8, **dadurch gekennzeichnet, dass** die genannte tragbare USB-Festplatte (25) eine Erweiterter-Service-Set-Kennung (ESSID) des genannten drahtlosen Gateway (21) beinhaltet, wobei der genannte Computer (23) mit dem genannten drahtlosen Gateway (21) durch die ESSID verbunden wird.

10. Verfahren nach Anspruch 8, **dadurch gekennzeichnet, dass** der genannte Schritt d eine XOR-(exklusiv-oder)-Operation zum Lokalisieren der genannten Differenzregion zwischen dem genannten N-ten Präsentations-Frame und dem genannten N-1-ten Präsentations-Frame benutzt.

11. Verfahren nach Anspruch 8, **dadurch gekennzeichnet, dass** das genannte Update-Bild des genannten Schrittes d ein rechteckiger Bereich ist, der die genannte Differenzregion enthält.

12. Verfahren nach Anspruch 8, **dadurch gekennzeichnet, dass** das genannte Update-Bild des genannten Schritts e vor dem Weiterleiten zu dem genannten drahtlosen Gateway (21) durch den genannten Computer (23) gezippt wird.

13. Verfahren nach Anspruch 12, **dadurch gekennzeichnet, dass** das genannte Update-Bild des genannten Schritts f vor dem Integrieren mit dem genannten N-1-ten Präsentations-Frame im Voraus entzippt wird.

14. Computerprogramm, das Befehle umfasst, um zu bewirken, dass das Computergerät von Anspruch 4 die Schritte des Verfahrens von Anspruch 8 durchführt.

## Revendications

1. Disque portable USB (25) avec une fonction de technologie « plug-and-show », appliqué à un système de présentation sans fil ayant un ordinateur (23) et une passerelle sans fil (21), l'ordinateur (23) étant en mesure d'afficher une pluralité de trames de présentation et de se connecter sans fil à la passerelle sans fil (21), le disque portable USB (25) étant en mesure d'établir une connexion amovible avec l'ordinateur (23), **caractérisé par** :
une mémoire (252) servant à stocker une N-ème trame de présentation et une N-1-ème trame de présentation ;
un module de capture et d'analyse d'images (253) servant à repérer au moins une région de différence entre la N-ème trame de présentation et la N-1-ème trame de présentation et servant par ailleurs à capturer une image de mise à jour correspondant à la région de différence au niveau de la N-ème trame de présentation ; et
un module de technologie « plug-and-show » (254) servant à commander le module de capture et d'analyse d'images pour qu'il effectue un processus de capture et d'analyse d'images et servant par ailleurs à acheminer l'image de mise à jour à la passerelle sans fil (21) par le biais de l'ordinateur (23) ;
dans lequel, après que la passerelle sans fil (21) a reçu l'image de mise à jour, l'image de mise à jour est intégrée à la N-1-ème trame de présentation dans la passerelle sans fil (21) de manière à reproduire la N-ème trame de présentation dans la passerelle sans fil (21) ; et
inclure un module de détection de réseau sans fil servant à détecter des signaux sans fil de ladite passerelle sans fil et servant à commander la connexion sans fil entre ledit ordinateur et ladite passerelle sans fil, quand ledit disque portable USB se connecte audit ordinateur.

2. Disque portable USB (25) selon la revendication 1, **caractérisé en ce que** ledit système de présentation sans fil comprend par ailleurs un dispositif d'affichage (22) connecté à ladite passerelle sans fil (21) et utilisé pour afficher lesdites trames de présentation émises en sortie en provenance de ladite passerelle sans fil (21).

3. Disque portable USB (25) selon la revendication 1, **caractérisé en ce que** ledit ordinateur (23) a un port de transmission (24) servant à établir ladite connexion amovible avec ledit disque portable USB (25).

4. Système de présentation sans fil, **caractérisé par** :
un ordinateur (23) servant à afficher une pluralité de trames de présentation ;
une passerelle sans fil (21) en mesure de se connecter sans fil à l'ordinateur (23) et de par ailleurs recevoir les trames de présentation acheminées en provenance de l'ordinateur (23) ; et
un disque portable USB (25), tel qu'il est défini selon la revendication 1, formant une connexion amovible avec l'ordinateur (23).

5. Système de présentation sans fil selon la revendication 4, **caractérisé par** ailleurs par l'inclusion d'un dispositif d'affichage (22) connecté à ladite passerelle sans fil (21) et utilisé pour afficher lesdites trames de présentation émises en sortie en provenance de ladite passerelle sans fil (21).

6. Système de présentation sans fil selon la revendication 4, **caractérisé en ce que** ledit ordinateur (23) a un port de transmission (24) servant à établir ladite connexion amovible avec ledit disque portable USB (25).

7. Système de présentation sans fil selon la revendication 4, caractérisé en ce ledit disque portable USB (25) comprend par ailleurs un module de détection de réseau sans fil (251) servant à détecter des signaux sans fil de ladite passerelle sans fil (21) et servant à commander la connexion sans fil entre ledit ordinateur (23) et ladite passerelle sans fil (21), quand ledit disque portable USB (25) se connecte audit ordinateur (23).

8. Procédé de présentation sans fil par l'utilisation d'un disque portable USB (25), le procédé étant **caractérisé par** les étapes consistant à :
a. connecter le disque portable USB (25) stockant plusieurs trames de présentation à un ordinateur (23) ;
b. commander l'ordinateur (23) pour établir une connexion sans fil avec une passerelle sans fil (21) ;
c. afficher une N-ème trame de présentation dans l'ordinateur (23) ;
d. effectuer un processus de capture et d'analyse d'images pour repérer au moins une région de différence entre la N-ème trame de présentation et une N-1-ème trame de présentation et pour par ailleurs capturer une image de mise à jour correspondant à la région de différence au niveau de la N-ème trame de présentation ;
e. acheminer l'image de mise à jour à la passerelle sans fil (21) par le biais de l'ordinateur (23) ;
f. intégrer l'image de mise à jour à la N-1-ème trame de présentation pour reformer la N-ème trame de présentation dans la passerelle sans fil (21) ;
g. acheminer la N-ème trame de présentation reformée de la passerelle sans fil (21) à un dispositif d'affichage (22) ;
h. déterminer si oui ou non toutes les trames de présentation ont été affichées ; et
i. si la réponse est négative, affecter N+1 pour remplacer N et répéter à nouveau l'étape c ; autrement, mettre fin à l'affichage des trames de présentation.

9. Procédé selon la revendication 8, **caractérisé en ce que** ledit disque portable USB (25) comprend dans celui-ci un ESSID (extended service set identifier - identifiant d'ensemble de services étendus) de ladite passerelle sans fil (21), ledit ordinateur (23) se connectant à ladite passerelle sans fil (21) par le biais de l'identifiant ESSID.

10. Procédé selon la revendication 8, **caractérisé en ce que** ladite étape d utilise un opération XOR (exclusive-or - ou exclusif) pour repérer ladite région de différence entre ladite N-ème trame de présentation et ladite N-1-ème trame de présentation.

11. Procédé selon la revendication 8, **caractérisé en ce que** ladite image de mise à jour de ladite étape d est une zone rectangulaire contenant ladite région de différence.

12. Procédé selon la revendication 8, **caractérisé en ce que** ladite image de mise à jour de ladite étape e est zippée à l'avance avant d'être acheminée jusqu'à ladite passerelle sans fil (21) par le biais dudit ordinateur (23).

13. Procédé selon la revendication 12, **caractérisé en ce que** ladite image de mise à jour de ladite étape f is dézippée à l'avance avant d'être intégrée à ladite N-1-ème trame de présentation.

14. Programme informatique comportant des instructions servant à amener le dispositif informatique de la revendication 4 à exécuter les étapes du procédé de la revendication 8.
